# EUROPEAN PATENT APPLICATION

(11) **EP 4 450 674 A1**
(43) Date of publication of application: **23.10.2024**
(21) Application number: 22907572.6
(22) Date of filing: 26.01.2022
(51) Int. Cl.: C23C 2/12, C23C 2/40, C22C 21/10, B21D 22/02

(54) **STEEL SHEET FOR HOT PRESSING AND HOT-STAMPED PART MANUFACTURED USING SAME**

(30) Priority: 14.12.2021 KR 20210178887
(71) Applicant: Hyundai Steel Company, Incheon 22525 (KR)
(72) Inventor: LEE, Jae Min, Incheon 22525 (KR); BAE, Sun Young, Incheon 22525 (KR)
(74) Representative: Viering, Jentschura & Partner mbB Patent- und Rechtsanwälte
(86) International application number: PCT/KR2022/001411
(87) International publication number: WO 2023/113099

(57) **Abstract**

An embodiment of the present invention discloses a hot-stamped part including: a base steel sheet; and a plated layer provided on the base steel sheet and including zinc (Zn), magnesium (Mg), silicon (Si), aluminum (Al), strontium (Sr), and the balance of iron (Fe) and other inevitable impurities, wherein the plated layer includes an alloying blocking layer, an intermediate alloy layer, and a corrosion resistance reinforcement layer which are sequentially stacked from the base steel sheet, and the corrosion resistance reinforcement layer includes an Sr-containing surface oxide layer.

## Description

### Technical Field

The present invention relates to a steel sheet for hot pressing and a hot-stamped part manufactured using the same.

### Background Art

Recently, as environmental regulations and safety standards in the automobile industry have been strengthened, the application of high-strength steel for light weight and stability of automobiles is increasing. Meanwhile, high-strength steel may secure high strength-to-weight characteristics, but fracture of materials may occur during processing or a spring back phenomenon may occur, making it difficult to form products with complex and precise shapes. Therefore, the application of hot press molding is expanding as a way to solve this problem.

Since hot press forming (hot stamping) includes press-processing performed by heating a steel sheet at a high temperature, it is easy to form a steel material, and since quenching is performed through a mold, the strength of a molded product may be secured. However, since the steel sheet is heated to a high temperature for hot press forming, there is a problem that the surface of the steel sheet is oxidized. To solve this problem, U.S. Patent No. 6,296,805 proposes a method of hot press forming aluminum-plated steel sheets. According to the invention of U.S. Patent No. 6,296,805, since the aluminum-plated layer is present on the surface of the steel sheet, it is possible to prevent the surface of the steel sheet from being oxidized by heating the steel sheet.

As such an aluminum-plated layer, Al-Si-based plating is applied to hot stamping. However, Al-Si-based plating has excellent high temperature oxidation resistance, but it has the disadvantages of reducing molding workability and corrosion resistance due to loss of a plated layer as cracking and detachment of the plated layer are caused during processing due to the plated surface of high hardness and pores present on the plated surface after hot stamping. In addition, for the existing Al-Si-based hot stamping plating material, the corrosion-resistant function of the plated layer after hot stamping simply acts as only a protective layer, and thus, red dirt easily occurs when the plated layer lost due to friction during molding is exposed to the corrosion environment.

In order to improve this problem, Zn-based hot stamping plating technology in which metal materials in the plated layer have sacrificial anti-corrosion properties has been developed, but there are many restrictions on commercialization due to high volatility and high oxidation problems which Zn has in high-temperature hot stamping process and liquid metal embrittlement (LME) caused by high temperature molding.

### Disclosure

### Technical Problem

Provided are a steel sheet for hot pressing and a hot-stamped part manufactured using the same, which have sacrificial anti-corrosion properties, and at the same time, excellent processability, by adding Si, Zn, Mg, and Sr at an appropriate ratio in forming an aluminum-based plated layer.

### Technical Solution

According to an aspect of the present invention, a steel sheet for hot pressing includes a base steel sheet, and a plated layer arranged on the base steel sheet and including 20 wt% to 45 wt% of zinc (Zn), 0.2 wt% to 3 wt% of magnesium (Mg), 1 wt% to 5 wt% of silicon (Si), 0.01 wt% to 0.5 wt% of strontium (Sr), and the balance of aluminum (Al) and other inevitable impurities.

According to an embodiment, the plated layer may have an Sr-based oxide layer on a surface of the plated layer.

According to an embodiment, an average thickness of the Sr-based oxide layer may be 10 nm to 5 µm.

According to an embodiment, magnesium (Mg) of a surface layer of the plated layer may be distributed as an Mg-based intermetallic compound, and 80 % or more of the Mg-based intermetallic compound may be distributed in a zinc (Zn) rich region located on the surface layer of the plated layer.

According to an embodiment, the Mg-based intermetallic compound may include a Mg₂Si phase.

According to an embodiment, the Mg₂Si phase distributed on the surface of the plated layer may have a phase fraction of 2 % to 10 %.

According to another aspect of the present invention, a hot-stamped part includes a base steel sheet, and a plated layer arranged on the base steel sheet and including zinc (Zn), magnesium (Mg), silicon (Si), aluminum (Al), strontium (Sr), and the balance of iron (Fe) and other inevitable impurities, wherein the plated layer includes an alloying blocking layer, an intermediate alloy layer, and a corrosion resistance reinforcement layer sequentially laminated from the base steel sheet, and the corrosion resistance reinforcement layer includes a surface oxide layer including strontium (Sr).

According to an embodiment, an average thickness of the surface oxide layer may be less than 10 µm.

According to an embodiment, the surface oxide layer may include 30 wt% to 70 wt% of zinc (Zn), 5 wt% to 20 wt% of oxygen (O), 3 wt% to 20 wt% of iron (Fe), 0.5 wt% to 10 wt% of magnesium (Mg), 0.5 wt% to 20 wt% of aluminum (Al), 0 to 5 wt% of silicon (Si), and 0 to 1 wt% of strontium (Sr).

According to an embodiment, the corrosion resistance reinforcement layer may include a first enriched portion in which zinc (Zn) is enriched and a second enriched portion in which magnesium (Mg) is enriched.

According to an embodiment, the alloying blocking layer may include 70 wt% to 90 wt% of iron (Fe), 5 wt% to 15 wt% of aluminum (Al), and 0.5 wt% to 4 wt% of silicon (Si).

According to an embodiment, the intermediate alloy layer may include 35 wt% to 45 wt% of iron (Fe), 30 wt% to 45 wt% of aluminum (Al), 0.5 wt% to 5 wt% of silicon (Si), and 5 wt% to 20 wt% of Zinc (Zn).

According to an embodiment, the corrosion resistance reinforcement layer may include 20 wt% to 45 wt% of iron (Fe) and 10 wt% to 35 wt% of aluminum (Al).

According to an embodiment, the first enriched portion may have an average thickness of 1 µm to 10 µm.

According to an embodiment, an average thickness of the plated layer may be 15 µm to 40 µm.

### Advantageous Effects

According to embodiments of the present invention, provided are a steel sheet for hot pressing and a hot-stamped part manufactured using the same, which have sacrificial anti-corrosion properties, and at the same time, excellent processability, by adding Si, Zn, Mg, and Sr at an appropriate ratio in forming an aluminum-based plated layer.

### Description of Drawings

FIG. 1 is a cross-sectional view illustrating a cross-section of a steel sheet for hot pressing according to an embodiment of the present invention.
FIGS. 2 and 3 illustrate images obtained by mapping a specific element on a surface of a plated layer of a steel sheet for hot pressing according to an embodiment of the present invention.
FIG. 4 is a flowchart schematically illustrating a method of manufacturing the steel sheet for hot pressing of FIG. 1.
FIG. 5 illustrates a cross-sectional image of a hot-stamped part according to an embodiment of the present invention.
FIG. 6 illustrates an image showing the surface of the plated layer of the hot-stamped part of FIG. 5.
FIGS. 7A and 7B illustrate surface images of a hot-stamped part according to an embodiment and a comparative example of the present invention.
FIGS. 8A and 8B are graphs showing results of analyzing the content of each element in a depth direction from the surface of a plated layer according to an embodiment and a comparative example of the present invention.
FIG. 9 illustrates a two-dimensional (2D) image of strontium (Sr) distribution of a steel sheet for hot pressing according to an embodiment of the present invention, in which the strontium (Sr) distribution is measured by secondary ion mass spectrometry (SIMS).
FIG. 10 illustrates a three-dimensional (3D) image of strontium (Sr) distribution of a hot-stamped part according to an embodiment of the present invention, in which the strontium (Sr) distribution is measured by SIMS.
FIG. 11 illustrates an image obtained by mapping a zinc (Zn) component based on a cross section of a plated layer according to an embodiment of the present invention.
FIG. 12 illustrates an image obtained by mapping a magnesium (Mg) component based on a cross section of a plated layer according to an embodiment of the present invention.

### Best Mode

### Mode for Invention

The present invention may apply various transforms and have various embodiments, and particular embodiments are illustrated in the drawings and will be described in detail in the detailed description with reference to the illustrated drawings. The effects and features of the present invention, and methods of achieving the effects and features, will become apparent with reference to the embodiments described in detail with reference to the drawings. However, the present invention is not limited to the embodiments disclosed below, but may be implemented in various forms.

Hereinafter, embodiments of the present invention will be described in detail with reference to the accompanying drawings, and the same or corresponding components will be denoted by the same reference numerals and redundant descriptions thereof will be omitted.

In the disclosure, terms such as first, second, and the like are used for the purpose of distinguishing one component from another component, not for the limited meaning.

In the disclosure, the expression of the singular includes the expression of the plural, unless the context clearly indicates otherwise.

In the disclosure, terms such as include or have mean that the features or components described in the disclosure exist, and do not exclude in advance the possibility of adding one or more other features or components.

In the disclosure, when a part of a layer, region, component, etc. is said to be above or on another part, it does not only include a case that the one part is directly on top of the other part, but also includes a case that another layer, region, component, or the like is placed therebetween.

In the disclosure, when a layer, a region, a component, and the like are connected to each other, it does not only include a case that the layer, the region, and the component are directly connected to each other, or/and but also includes a case that another layer, another region, another component, or the like is placed therebetween to be indirectly connected to each other. For example, in the disclosure, when a layer, region, component, etc. are electrically connected to each other, it means a case that the layer, region, component, etc. are directly electrically connected to each other, and/or a case that another layer, region, component, etc. are placed therebetween to be indirectly electrically connected to each other.

In the disclosure, "A and/or B" refers to A, B, or A and B. In addition, "at least one of A and B" refers to A, B, or A and B.

In the disclosure, the x-axis, y-axis, and z-axis are not limited to three axes on an orthogonal coordinate system, and may be interpreted in a broad sense including the same. For example, the x-axis, y-axis, and z-axis may be orthogonal to each other, but may also refer to different directions that are not orthogonal to each other.

In the disclosure, when some embodiments may be implemented in various forms, a specific process sequence may be performed differently from the order described. For example, two processes described in succession may be performed substantially simultaneously, or may be performed in the opposite order to the order described.

In the drawings, the sizes of components may be exaggerated or reduced for convenience of explanation. For example, since the size and thickness of each component shown in the drawings are arbitrarily shown for convenience of explanation, the present invention is not necessarily limited to those illustrated.

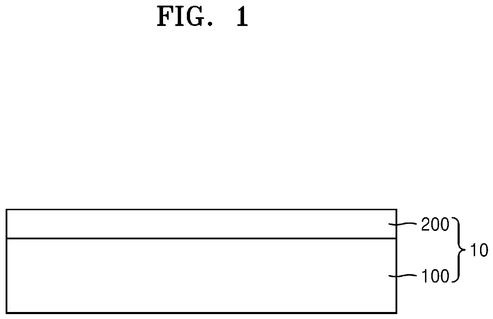

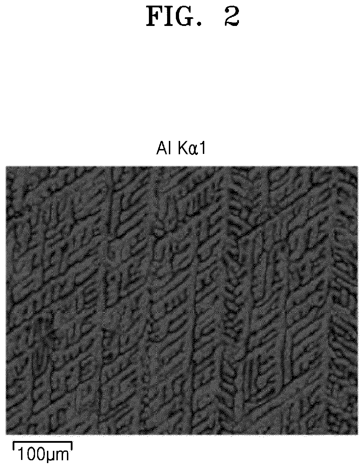

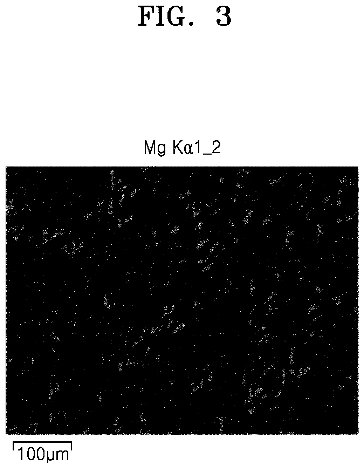

FIG. 1 is a cross-sectional view illustrating a cross-section of a steel sheet for hot pressing according to an embodiment of the present invention, and FIGS. 2 and 3 are images obtained by mapping a specific element on a surface of a plated layer of a steel sheet for hot pressing according to an embodiment of the present invention.

Referring to FIG. 1, a steel sheet 10 for hot pressing according to an embodiment of the present invention may include a base steel sheet 100 and a plated layer 200 located on the base steel sheet 100.

The base steel sheet 100 may be a steel sheet manufactured by performing a hot rolling process and a cold rolling process on a steel slab cast to include a predetermined content of a predetermined alloy element. For example, the base steel sheet 100 may include a first alloy composition. The first alloy composition may include 0.01 wt% to 0.5 wt% of carbon (C), 0.01 wt% to 3.0 wt% of silicon (Si), 0.3 wt% to 5.0 wt% of manganese (Mn), 0 wt% to 0.1 wt% of phosphorus (P), 0 wt% to 0.1 wt% of sulfur (S), and the balance of iron (Fe) and other inevitable impurities.

In addition, the first alloy composition may further include one or more components of boron (B), titanium (Ti), niobium (Nb), chromium (Cr), molybdenum (Mo), and nickel (Ni). Specifically, the first alloy composition may further include one or more components of 0.001 wt% to 0.005 wt% of boron (B), 0.01 wt% to 0.1 wt% of titanium (Ti), 0.01 wt% to 0.1 wt% of niobium (Nb), 0.01 wt% to 0.5 wt% of chromium (Cr), 0.01 wt% to 0.5 wt% of molybdenum (Mo), and 0.01 wt% to 1.0 wt% of nickel (Ni).

Carbon (C) is a major element that determines the strength and hardness of the base steel sheet 100, and is added for the purpose of securing the tensile strength of the base steel sheet 100 and securing the hardenability properties after a hot pressing process. The carbon may be included in an amount of 0.01 wt% to 0.5 wt% based on the total weight of the base steel sheet 100. When the carbon content is less than 0.01 wt%, it is difficult to secure the mechanical strength of the base steel sheet 100, whereas when the carbon content exceeds 0.5 wt%, problems of toughness deterioration or brittleness control of the base steel sheet 100 may occur.

Silicon (Si) acts as a ferrite stabilizing element in the base steel sheet 100. Silicon (Si) is a solid solution reinforcement element, which improves the ductility of the base steel sheet 100, and may improve the carbon-rich concentration in austenite by suppressing the formation of carbides in the low-temperature region. In addition, silicon (Si) is a key element in hot rolling, cold rolling, hot pressing structure homogenization (perlite, manganese segregation zone control), and fine dispersion of ferrite. Such silicon may be included in an amount of 0.01 wt% to 3.0 wt% based on the total weight of the base steel sheet 100. When the content of silicon is less than 0.01 wt%, it is difficult to obtain the above-described effect. Conversely, when the content of silicon exceeds 3.0 wt%, hot rolling and cold rolling loads may increase, hot rolled red scales may become excessive, and plating properties of the base steel sheet 100 may be deteriorated.

Manganese (Mn) is added to increase hardenability and strength during heat treatment. Such manganese may be included in 0.3 wt% to 5.0 wt% based on the total weight of the base steel sheet 100. When the manganese content is less than 0.3 wt%, an effect of grain refinement may be insufficient, and thus, a hard phase fraction in a molded product after hot pressing may be insufficient. On the other hand, when the content of manganese exceeds 5.0 wt%, ductility and toughness due to manganese segregation or pearlite bands may be reduced, which may cause deterioration in bending performance and may cause a heterogeneous microstructure.

Phosphorus (P) may be included in more than 0 wt% and 0.1 wt% or less based on the total weight of the base steel sheet 100 in order to prevent deterioration of the toughness of the base steel sheet 100. When the phosphorus content induced in the base steel sheet 100 exceeds 0.1 wt%, an iron phosphide compound may be formed to deteriorate toughness, and cracks may be induced in the base steel sheet 100 during the manufacturing process.

Sulfur (S) may be included in greater than 0 wt% and 0.1 wt% or less based on the total weight of the base steel sheet 100. If the sulfur content exceeds 0.1 wt%, hot processabilities are deteriorated, and surface defects such as cracks may occur due to the formation of large inclusions.

Boron (B) is added for the purpose of securing the hardenability and strength of the base steel sheet 100 by securing a martensitic structure, and has an effect of grain refinement due to an increase in austenite grain growth temperature. Such boron may be included in 0.0001 wt% to 0.005 wt% based on the total weight of the base steel sheet 100. When boron is included in the above range, it is possible to prevent the occurrence of brittleness at the hard phase grain boundary, and secure high toughness and bendability.

Titanium (Ti) may be added for the purpose of reinforcement hardenability and enhancing the quality of materials by forming precipitates after hot press heat treatment. In addition, titanium (Ti) forms precipitated phase such as Ti (C, N) at a high temperature, thereby effectively contributing to austenite grain refinement. Such titanium may be included in 0.01 wt% to 0.1 wt% based on the total weight of the base steel sheet 100. When titanium is included in the content range, poor continuous casting and coarsening of precipitates may be prevented, and physical properties of the steel material may be easily secured, and defects such as occurrence of cracks may be prevented on the surface the steel material.

Niobium (Nb) is added for the purpose of increasing strength and toughness according to a decrease in martensite packet size. Niobium may be included in 0.01 wt% to 0.1 wt% based on the total weight of the base steel sheet 100. When niobium is included in the above range, the crystal grain refinement effect of the steel material is excellent in the hot rolling and cold rolling process, it prevents cracks in the slab and brittle fracture of the product during steelmaking/continuous casting, and it is possible to minimize the formation of steelmaking coarse precipitates.

Chromium (Cr) is added for the purpose of improving the hardenability and strength of the base steel sheet 100. Such chromium may be included in 0.01 wt% to 0.5 wt% based on the total weight of the base steel sheet 100. When chromium is included in the above range, the hardenability and strength of the base steel sheet 100 may be improved, and an increase in production costs and a decrease in toughness of the steel material may be prevented.

Molybdenum (Mo) may contribute to the improvement of the strength of the base steel sheet 100 by suppressing coarsening of precipitates and increasing the hardenability during hot rolling and hot pressing. Such molybdenum (Mo) may be included in an amount of 0.01 wt% to 0.5 wt% based on the total weight of the base steel sheet 100.

The plated layer 200 may be formed on at least one surface of the base steel sheet 100 at an adhesion amount of 20 to 200 g/m². Here, the thickness of the plated layer 200 may be determined according to the amount of adhesion of the plated layer 200. When the adhesion amount of the plated layer 200 is less than 50 g/m², corrosion resistance decreases, and if the adhesion amount of the plated layer 200 exceeds 200 g/m², the productivity of the hot pressing steel sheet 10 decreases, and the plated layer 200 may be peeled off from the base steel sheet 100 since the plated layer 200 is attached to a roller or mold during a hot pressing process.

In an embodiment (first embodiment), the plated layer 200 may include silicon (Si), zinc (Zn), magnesium (Mg), and the balance of aluminum (Al) and other inevitable impurities.

Silicon (Si) may be added to improve processability of the plated layer 200 by reducing the growth of an alloy layer during plating. Silicon (Si) may be included in an amount of 1 wt% to 5 wt% based on the total weight of the plated layer 200, preferably, 1 wt% to 4 wt%. When the content of silicon (Si) is less than 1 wt%, it is insufficient to control the growth of the alloy layer during a hot stamping heat treatment process of the plated layer 200, and the processability of the plated layer 200 may decrease during processing. In addition, if the content of silicon (Si) exceeds 5 wt%, silicon (Si) may precipitate in the form of a coarse single phase when plating during a cold rolling process, thereby reducing processability and corrosion resistance. In this way, when silicon (Si) is excessively included, the steel sheet 10 for hot pressing may have insufficient physical properties to be used for general construction or home appliances. In addition, if silicon (Si) is excessively included, a phase with a high content of silicon (Si) increases in an intermediate alloy layer 220 to be described later after hot stamping the hot pressing steel sheet 10, and the corrosion resistance of the plated layer 200 after hot stamping may decrease as the fraction of the phase with the high content of silicon (Si) increases.

Zinc (Zn) may be added for the purpose of improving a sacrificial anti-corrosion capability. Zinc (Zn) may be included in an amount of 20 wt% to 45 wt%, preferably 25 wt% to 40 wt%, based on the total weight of the plated layer 200. When the content of zinc (Zn) is less than 20 wt%, the content of zinc (Zn) included in the plated layer 200 may be insufficient, and thus corrosion resistance through sacrificial anti-corrosion properties may be insufficient to be expressed. When the content of zinc (Zn) exceeds 45 wt%, the zinc (Zn) component scatters in a plating bath during a cold rolled plating process, increasing the probability of generating Zn Ash (ZnO) defects, which may deteriorate plating quality. In addition, if the content of zinc (Zn) exceeds 45 wt%, the probability of a liquid metal embrittlement phenomenon occurring in a processing part during high-temperature processing after hot stamping heat treatment may increase.

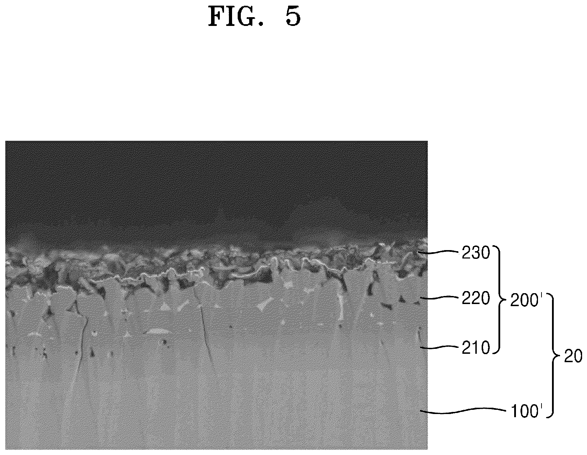

Meanwhile, in another embodiment (second embodiment), zinc (Zn) may be included in an amount of 30 wt% to 45 wt% based on the total weight of the plated layer 200. In this way, by controlling the content of zinc (Zn) to 30 wt% or more, a zinc rich phase may be sufficiently formed in an intermediate alloy layer 220 of a plated layer 200' of a hot stamping part 20, as described later with reference to FIG. 5.

Magnesium (Mg) may be added for the purpose of improving corrosion resistance. Magnesium (Mg) may be included in an amount of 0.2 wt% to 3 wt%, preferably 0.2 wt% to 2.5 wt%, based on the total weight of the plated layer 200. When the content of magnesium (Mg) is less than 0.2 wt%, the effect of improving corrosion resistance may not be sufficiently expressed. When the content of magnesium (Mg) exceeds 3 wt%, surface quality may be degraded during plating due to excessive oxidation of magnesium (Mg).

Meanwhile, an aluminum-rich (Al-rich) region and a zinc-rich (Zn-rich) region may exist on a surface layer of the plated layer 200. The Al-rich region may mean a region where aluminum (Al) is concentrated at a high ratio, and the Zn-rich region may mean a region where zinc (Zn) is concentrated at a high ratio. In addition, the surface layer of the plated layer 200 may include a compound of magnesium (Mg) and/or an alloy phase of magnesium (Mg).

FIGS. 2 and 3 illustrate images in which a specific element is mapped in the surface layer of the plated layer 200, and FIG. 2 illustrates an image in which aluminum (Al) is mapped, and FIG. 3 is an image in which magnesium (Mg) is mapped. In FIG. 2 , a colored (e.g., green) portion is a region where aluminum (Al) is concentrated, and a black portion may mainly contain a distribution of magnesium (Mg). Additionally, a portion expressed in color (e.g., red) in FIG. 3 may be a region where magnesium (Mg) is concentrated.

In an embodiment, magnesium (Mg) present in the surface layer of the plated layer 200 may be distributed as a Mg-based intermetallic compound including magnesium (Mg). An area fraction of the Mg-based intermetallic compound present on the surface of the plated layer 200 may be about 2 % to about 20 %. More specifically, the Mg-based intermetallic compound present on the surface of the plated layer 200 may be mainly distributed in the Zn-rich region. For example, more than 80 % of the Mg-based intermetallic compound present on the surface of the plated layer 200 may be distributed in the Zn-rich region. Since the Mg-based intermetallic compound may collapse an Al₂O₃ oxide layer of the Al-rich region having strong corrosion resistance, the fraction may be preferably 2 % to 20 %, and at least 80 % of the Mg-based intermetallic compound may be distributed in the Zn-rich region.

For example, the Mg-based intermetallic compound may include a Mg₂Si phase. The Mg₂Si phase is formed by the reaction of silicon (Si) and magnesium (Mg) included in the plated layer 200, and the Mg₂Si phase may be a precipitated phase that improves corrosion resistance. The Mg₂Si phase may be distributed both on the surface and inside of the plated layer 200. Therefore, the distribution of Mg₂Si phases on the surface of the plated layer 200 may mean that a part of the Mg₂Si phase is exposed through the surface of the plated layer 200. In an embodiment, the fraction of the Mg₂Si phase distributed on the surface of the plated layer 200 may be about 2 % to about 10 %. Not only can the Mg₂Si phase quickly penetrate into the Zn-rich region in a corrosion environment and reduce a corrosion rate that goes down toward the base steel sheet 100, but magnesium (Mg) dissolved from the Mg₂Si phase serves to stabilize the formation of simonkolleite that improves corrosion resistance among zinc oxides, thereby further reinforcement the corrosion resistance of the plated layer 200.

On the other hand, when the content of magnesium (Mg) and the content of silicon (Si) exceeds the above-mentioned ranges, respectively, a large number of network-type Mg₂Si phases are formed on the surface of the plated layer 200, which may increase the alkalinity of the surface of the plated layer 200 in a corrosion environment and create a source of galvanic corrosion. This phenomenon not only causes the oxide layer of the Al-rich region, which has strong corrosion resistance by the aluminum oxide layer (Al₂O₃), to collapse, but also generates pitting corrosion to reduce corrosion resistance. To minimize this phenomenon, as described above, the range of the fraction of the Mg₂Si phase distributed on the surface of the plated layer 200 may be 2 % to 10 %. When the fraction of Mg₂Si phases distributed on the surface of the plated layer 200 is generated to be less than 2 %, corrosion penetration control of the Zn-rich region is insufficient, and if the fraction of Mg₂Si phases exposed through the surface of the plated layer 200 is generated in excess of 10 %, the probability of generating pitting corrosion in the corrosion environment may be rapidly increased.

On the other hand, such a Mg₂Si phase may not remain after hot stamping the steel sheet 10 for hot pressing.

In another embodiment (third embodiment), the plated layer 200 may include silicon (Si), zinc (Zn), magnesium (Mg), and the balance of aluminum (Al) and other inevitable impurities, and further include strontium (Sr).

Silicon (Si) may be included in an amount of 1 wt% to 5 wt% based on the total weight of the plated layer 200, preferably, 1 wt% to 4 wt%, and more preferably, 1 wt% to 3.5 wt%. Zinc (Zn) may be included in an amount of 20 wt% to 45 wt% based on the total weight of the plated layer 200, preferably, 25 wt% to 40 wt%, and more preferably, 30 wt% to 45 wt%. Magnesium (Mg) may be included in an amount of 0.2 wt% to 3 wt% based on the total weight of the plated layer 200, preferably, 0.2 wt% to 2.5 wt%, and more preferably, 0.2 wt% to 2 wt%. Descriptions of silicon (Si), zinc (Zn), and magnesium (Mg) are the same as those of the embodiment described above.

Strontium (Sr) may be added for the purpose of improving sacrificial anti-corrosion capability and weldability. Strontium (Sr) may quickly diffuse to the surface of the plated layer 200 due to a plating bath temperature to form a strong and thin Sr-based oxide layer on the surface of the plated layer 200. The Sr-based oxide layer may serve to minimize a metal oxide including zinc (Zn), magnesium (Mg), and the like in the plated layer 200.

In this embodiment, the plated layer 200 may include an Al-rich region and a Zn-rich region described with reference to FIGS. 2 and 3. The Sr-based oxide layer may be formed on the Al-rich region and the Zn-rich region. That is, the Sr-based oxide layer may be located on the surface of the surface layer of the plated layer 200 in which the Al-rich region and the Zn-rich region are present. In an embodiment, an average thickness of the Sr-based oxide layer formed on the surface of the plated layer 200 may be 5 µm or less, more specifically 10 nm to 5 µm. The Sr-based oxide layer may be formed continuously or discontinuously on the surface of the plated layer 200.

Strontium (Sr) may be included in an amount of 0.01 wt% to 0.5 wt% based on the total weight of the plated layer 200. When the content of strontium (Sr) is less than 0.01 wt%, the oxidation reduction effect due to the addition of strontium (Sr) may not be sufficiently expressed, and if the content of strontium (Sr) exceeds 0.5 wt%, some regions may not be plated during plating or the appearance of the plated layer 200 may be deteriorated due to excessive generation of strontium (Sr) oxide.

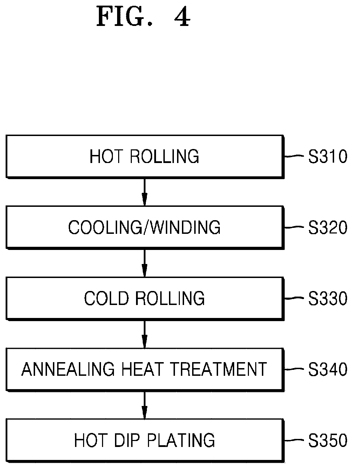

FIG. 4 is a flowchart schematically illustrating a method of manufacturing the steel sheet for hot pressing of FIG. 1. Hereinafter, a method of manufacturing a steel sheet for hot pressing is described with reference to FIGS. 1 and 4.

A method of manufacturing a steel sheet for hot pressing according to an embodiment of the present invention may include a hot rolling operation (S310), a cooling/winding operation (S320), a cold rolling operation (S330), an annealing heat treatment operation (S340), and a hot dip plating operation (S350).

First, a semi-finished steel slab, which is a subject of a process of forming a plated steel sheet, is prepared. The steel slab may include 0.01 wt% to 0.5 wt% of carbon (C), 0.01 wt% to 3.0 wt% of silicon (Si), 0.3 wt% to 5.0 wt% of manganese (Mn), 0 wt% to 0.1 wt% of phosphorus (P), 0 wt% to 0.1 wt% of sulfur (S), and the balance of iron (Fe) and other inevitable impurities.

A reheating operation of the steel slab for hot rolling is carried out. In the steel slab reheating operation, segregated components are reused during casting by reheating the steel slab secured through a continuous casting process to a predetermined temperature. In an embodiment, a slab reheating temperature (SRT) may be 1200 °C to 1400 °C. When the slab reheating temperature (SRT) is lower than 1200 °C, it is difficult to see a large homogenization effect of alloy elements because segregated components are not sufficiently reused during casting, and it is difficult to see a large employment effect of titanium (Ti). The higher the slab reheating temperature (SRT), the more advantageous it is for homogenization, but if slab reheating temperature (SRT) exceeds 1400 °C, the austenite crystal grain size increases, which not only makes it difficult to secure strength, but also increases only the manufacturing cost of the steel sheet due to the excessive heating process.

In the hot rolling operation (S310), the reheated steel slab is hot rolled at a predetermined finishing delivery temperature (FDT). In an embodiment, a FDT may be 880 °C to 950 °C. In this case, if the FDT is lower than 880 °C, it is difficult to secure the processability of the steel sheet due to the occurrence of mixed structure caused by abnormal region rolling, and there is a problem of degrading processability due to nonuniformity of microstructure, as well as a problem of passing ability during hot rolling due to sudden phase changes. When the FDT exceeds 950 °C, austenite grains are coarsened. In addition, there is a risk that TiC precipitates may coarsen and deteriorate final component performance.

In the cooling/winding operation (S320), the hot rolled steel sheet is cooled to a predetermined coiling temperature (CT) and wound. In an embodiment, the coiling temperature may be 550 °C to 800 °C. The coiling temperature affects the redistribution of carbon (C), and when the coiling temperature is less than 550 °C, the low-temperature phase fraction increases due to overcooling, which may increase strength and intensify the roll pressing load during cold rolling, and there is a problem in that ductility is rapidly reduced. Conversely, when the coiling temperature exceeds 800 °C, there is a problem of causing deterioration of formability and strength due to abnormal crystal grain growth or excessive crystal grain growth.

In the cold rolling operation (S330), the wound steel sheet is subjected to be uncoiled, acid pickled and then cold rolled. Here, the acid pickling is carried out for the purpose of removing the scale of the wound steel sheet, that is, the hot-rolled coil manufactured through the hot rolling process.

The annealing heat treatment operation (S340) is an operation of annealing and heat-treating the cold-rolled steel sheet at a temperature of 700 °C or higher. In an embodiment, the annealing heat treatment temperature may be 700 °C to 850 °C. The annealing may be carried out in a reducing atmosphere including 10 % to 30 % of hydrogen and 70 % to 90 % of nitrogen. The annealing heat treatment may include an operation of heating the cold-rolled plate and cooling the heated cold-rolled plate at a predetermined cooling rate.

The hot dip plating operation (S350) is an operation of forming a plated layer on an annealed heat treated steel sheet. In the hot dip plating operation (S350), the plated layer 200 may be formed on the annealed heat-treated steel sheet, that is, the base steel sheet 100.

Specifically, the hot dip plating operation (S350) may include an operation of immersing the base steel sheet 100 in a plating bath having a temperature of 500 °C to 660 °C, more preferably 550 °C to 660 °C to form a hot dip plated layer on the surface of the base steel sheet 100; and a cooling operation of forming the plated layer 200 by cooling the base steel sheet 100 on which the hot-dip plated layer is formed.

The plated layer 200 may be formed on at least one surface of the base steel sheet 100 at an adhesion amount of 20 g/m² to 300 g/m². In the case of the thickness of the plated layer 200, the thickness of the hot-dip plated layer may be adjusted by spraying air or gas onto the base steel sheet 100 to wipe the hot-dip plated layer before cooling the base steel sheet 100 on which the hot-dip plated layer is formed.

In an embodiment (first embodiment), the plating bath may include 1 wt% to 5 wt% of silicon (Si), 20 wt% to 45 wt% of zinc (Zn), 0.2 wt% to 3 wt% of magnesium (Mg), and the balance of aluminum (Al). The plated layer 200 may be an Al-Si-Zn-Mg-based plated layer.

Silicon (Si) included in a plating bath may be added to improve processability of the plated layer 200 by reducing the growth of an alloy layer during plating. When the content of silicon (Si) is less than 1 wt%, it is insufficient to control the growth of the alloy layer during a hot stamping heat treatment process of the plated layer 200, and the processability of the plated layer 200 may decrease during processing. In addition, if the content of silicon (Si) exceeds 5 wt%, silicon (Si) may precipitate in the form of a coarse single phase when plating during a cold rolling process, thereby reducing processability and corrosion resistance.

Zinc (Zn) included in a plating bath may be added for the purpose of improving a sacrificial anti-corrosion capability. When the content of zinc (Zn) is less than 20 wt%, the content of zinc (Zn) included in the plated layer 200 may be insufficient, and thus corrosion resistance through sacrificial anti-corrosion properties may be insufficient to be expressed. When the content of zinc (Zn) exceeds 45 wt%, the zinc (Zn) component scatters in a plating bath during a cold rolled plating process, increasing the probability of generating Zn Ash (ZnO) defects, which may deteriorate plating quality. In addition, if the content of zinc (Zn) exceeds 45 wt%, the probability of a liquid metal embrittlement phenomenon occurring in a processing part during high-temperature processing after hot stamping heat treatment may increase.

Magnesium (Mg) included in a plating bath may be added for the purpose of improving corrosion resistance. When the content of magnesium (Mg) is less than 0.2 wt%, the effect of improving corrosion resistance may not be sufficiently expressed. When the content of magnesium (Mg) exceeds 3 wt%, surface quality may be degraded during plating due to excessive oxidation of magnesium (Mg).

In another embodiment (second embodiment), the plating bath may include 1 wt% to 5 wt% of silicon (Si), 30 wt% to 45 wt% of zinc (Zn), 0.2 wt% to 3 wt% of magnesium (Mg), and the balance of aluminum (Al). The plated layer 200 formed through the above-described process may be an Al-Si-Zn-Mg-based plated layer. The contents of silicon (Si) and magnesium (Mg) are the same as those of the embodiment described above.

Zinc (Zn) included in a plating bath may be added for the purpose of improving a sacrificial anti-corrosion capability. When the content of zinc (Zn) is less than 30 wt%, the content of zinc (Zn) included in a plated layer 200' of a hot-stamped part 20, which will be described later with reference to FIG. 5, etc., may be insufficient, and thus, a Zn-rich phase to be described later may not be formed within an appropriate range in the plated layer 200'. Corrosion resistances may be further improved through the sacrificial anti-corrosion properties of the plated layer 200' through the Zn-rich phase. When the content of zinc (Zn) exceeds 45 wt%, the zinc (Zn) component scatters in a plating bath during a cold rolled plating process, increasing the probability of generating Zn Ash (ZnO) defects, which may deteriorate plating quality. In addition, if the content of zinc (Zn) exceeds 45 wt%, a liquid metal embrittlement phenomenon may occur in a processing part during high-temperature processing after hot stamping heat treatment.

In another embodiment (third embodiment), the plating bath may include 1 wt% to 5 wt% of silicon (Si), 20 wt% to 45 wt% of zinc (Zn), 0.2 wt% to 3 wt% of magnesium (Mg), 0.01 wt% to 0.5 wt% of strontium (Sr), and the balance of aluminum (Al). Preferably, the plating bath may include 25 wt% to 45 wt% of zinc (Zn), 0.2 wt% to 2.5 wt% of magnesium (Mg), 1 wt% to 4 wt% of silicon (Si), 0.01 wt% to 0.5 wt% of strontium (Sr), and the balance of aluminum (Al). More preferably, the plating bath may include 30 wt% to 45 wt% of zinc (Zn), 0.2 wt% to 2 wt% of magnesium (Mg), 1 wt% to 3.5 wt% of silicon (Si), 0.01 wt% to 0.5 wt% of strontium (Sr), and the balance of aluminum (Al).

Silicon (Si) included in a plating bath may be added to improve processability of the plated layer 200 by reducing the growth of an alloy layer during plating. When the content of silicon (Si) is less than 1 wt%, it is insufficient to control the growth of the alloy layer during a hot stamping heat treatment process of the plated layer 200, and the processability of the plated layer 200 may decrease during processing. In addition, if the content of silicon (Si) exceeds 5 wt%, silicon (Si) may precipitate in the form of a coarse single phase when plating during a cold rolling process, thereby reducing processability and corrosion resistance.

Zinc (Zn) included in a plating bath may be added for the purpose of improving a sacrificial anti-corrosion capability. When the content of zinc (Zn) is less than 20 wt%, the content of zinc (Zn) included in the plated layer 200 may be insufficient, and thus corrosion resistance through sacrificial anti-corrosion properties may be insufficient to be expressed. When the content of zinc (Zn) exceeds 45 wt%, the zinc (Zn) component scatters in a plating bath during a cold rolled plating process, increasing the probability of generating Zn Ash (ZnO) defects, which may deteriorate plating quality. In addition, if the content of zinc (Zn) exceeds 45 wt%, the probability of a liquid metal embrittlement phenomenon occurring in a processing part during high-temperature processing after hot stamping heat treatment may increase.

Magnesium (Mg) included in a plating bath may be added for the purpose of improving corrosion resistance. When the content of magnesium (Mg) is less than 0.2 wt%, the effect of improving corrosion resistance may not be sufficiently expressed. When the content of magnesium (Mg) exceeds 3 wt%, surface quality may be degraded during plating due to excessive oxidation of magnesium (Mg).

Strontium (Sr) included in a plating bath may be added for the purpose of improving sacrificial anti-corrosion capability and weldability. When the content of strontium (Sr) is less than 0.01 wt%, the oxidation reduction effect due to the addition of strontium (Sr) may not be sufficiently expressed, and if the content of strontium (Sr) exceeds 0.5 wt%, some regions may not be plated during plating or the appearance of the plated layer 200 may be hindered due to excessive generation of strontium (Sr) oxide.

The cooling operation of cooling the base steel sheet 100 on which the hot-dip plated layer is formed may undergo a cooling operation of cooling the base steel sheet 100 at an average cooling rate from the temperature of the plating bath to room temperature. Here, the overall average cooling rate of cooling from the temperature of the plating bath to room temperature may be 5 °C/s to 30 °C/s.

The plated layer 200 formed through the above-described process may be an Al-Si-Zn-Mg-Sr-based plated layer.

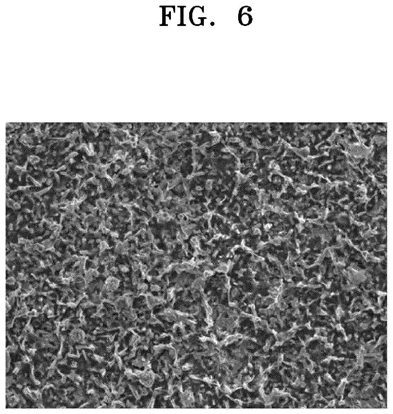

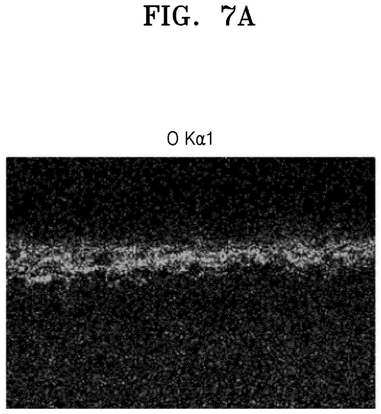

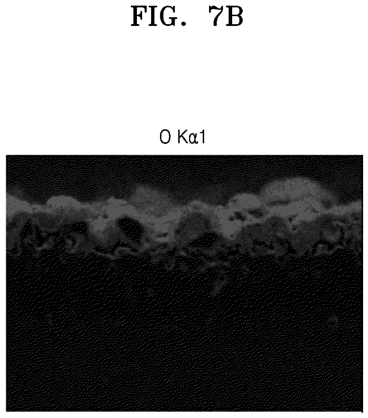

FIG. 5 illustrates a cross-sectional image of a hot-stamped part according to an embodiment of the present invention, and FIG. 6 illustrates an image showing the surface of the plated layer of the hot-stamped part of FIG. 5. FIG. 7A illustrates a surface image of a hot-stamped part according to an embodiment of the present invention, and FIG. 7B illustrates a surface image of a hot-stamped part according to a comparative example of the present invention.

Referring to FIGS. 5 and 6, the hot-stamped part 20 may include a base steel sheet 100' and a plated layer 200' attached to the base steel sheet 100'. The hot-stamped part 20 according to an embodiment of the present invention may be manufactured by applying a hot stamping process to the hot pressing steel sheet 10 described with reference to FIGS. 1 to 3.

The base steel sheet 100' may be a steel sheet manufactured by performing a hot rolling process and/or a cold rolling process on a slab cast to include a predetermined content of a predetermined alloy element. For example, the base steel sheet 100' may include a first alloy composition. The first alloy composition may include 0.01 wt% to 0.5 wt% of carbon (C), 0.01 wt% to 3.0 wt% of silicon (Si), 0.3 wt% to 5.0 wt% of manganese (Mn), 0 wt% to 0.1 wt% of phosphorus (P), 0 wt% to 0.1 wt% of sulfur (S), and the balance of iron (Fe) and other inevitable impurities.

In addition, the first alloy composition may further include one or more components of boron (B), titanium (Ti), niobium (Nb), chromium (Cr), molybdenum (Mo), and nickel (Ni). Specifically, the first alloy composition may further include one or more components of 0.001 wt% to 0.005 wt% of boron (B), 0.01 wt% to 0.1 wt% of titanium (Ti), 0.01 wt% to 0.1 wt% of niobium (Nb), 0.01 wt% to 0.5 wt% of chromium (Cr), 0.01 wt% to 0.5 wt% of molybdenum (Mo), and 0.01 wt% to 1.0 wt% of nickel (Ni).

Carbon (C) acts as an austenite stabilizing element in the base steel sheet 100'. Carbon is a major element that determines the strength and hardness of the base steel sheet 100, and is added for the purpose of securing the tensile strength of the base steel sheet 100' and securing the hardenability properties after a hot stamping process. Carbon may be included in 0.01 wt% to 0.5 wt% based on the total weight of the base steel sheet 100'. When the content of carbon is less than 0.01 wt%, it is difficult to secure a hard phase (martensite, etc.), which makes it difficult to satisfy the mechanical strength of the base steel sheet 100'. On the contrary, when the content of carbon exceeds 0.5 wt%, a problem of brittleness occurrence or bending performance reduction of the base steel sheet 100' may occur.

Silicon (Si) acts as a ferrite stabilizing element in the base steel sheet 100'. Silicon (Si) is a solid solution reinforcement element, which improves the strength of the base steel sheet 100', and may improve the carbon-rich concentration in austenite by suppressing the formation of carbides in the low-temperature region. In addition, silicon is a key element in hot rolling, cold rolling, hot pressing structure homogenization (perlite, manganese segregation zone control), and fine dispersion of ferrite. Silicon acts as a martensite strength non-homogeneous control element to improve collision performance. Such silicon may be included in an amount of 0.01 wt% to 3.0 wt% based on the total weight of the base steel sheet 100'. When the content of silicon is less than 0.01wt%, it may be difficult to obtain the above-mentioned effects, cementite formation and coarsening may occur in the final hot stamping martensitic structure, a homogenization effect of the base steel sheet may be minimal, and a V-bending angle may not be secured. On the contrary, when the content of silicon exceeds 0.3 wt%, the hot-rolled and cold-rolled loads increase, the hot-rolled red scale may become excessive, and the plating characteristics of the base steel sheet (100') may be deteriorated.

Manganese (Mn) acts as an austenite stabilizing element in the base steel sheet 100'. Manganese is added to increase hardenability and strength during heat treatment. Manganese may be included in 0.3 wt% to 5.0 wt% based on the total weight of the base steel sheet 100'. When the content of manganese is less than 0.3 wt%, the hardening capacity effect may not be sufficient, and the hard phase fraction in the molded product may be insufficient after hot stamping due to insufficient hardenability. On the other hand, when the content of manganese exceeds 5.0 wt%, ductility and toughness due to manganese segregation or pearlite bands may be reduced, which may cause deterioration in bending performance and may cause a heterogeneous microstructure.

Phosphorus (P) may be included in more than 0 wt% and 0.1 wt% or less based on the total weight of the base steel sheet 100 in order to prevent deterioration of the toughness of the base steel sheet 100'. When the content of phosphorus exceeds 0.1 wt%, an iron phosphide compound is formed to result in poor toughness and weldability, and cracks may be caused in the base steel sheet during the hot stamping process.

Sulfur (S) may be included in greater than 0 wt% and 0.1 wt% or less based on the total weight of the base steel sheet 100'. When the content of sulfur exceeds 0.1 wt%, hot processability, weldability, and impact characteristics are deteriorated after hot stamping, and surface defects such as cracks may occur due to the generation of large inclusions.

Boron (B) is added for the purpose of securing the hardenability and strength of the base steel sheet 100' by suppressing ferrite, pearlite, and bainite transformation, to thereby secure martensite structure, and has a grain refinement effect due to an increase in austenite grain growth temperature. Boron may be included in 0.0001 wt% to 0.005 wt% based on the total weight of the base steel sheet 100'. When boron is included in the above range, it is possible to prevent the occurrence of brittleness at the hard phase grain boundary, and secure high toughness and bendability.

Titanium (Ti) may be added for the purpose of reinforcement hardenability and enhancing the quality of materials by forming precipitates after a hot stamping process. In addition, titanium (Ti) forms precipitated phase such as Ti (C, N) at a high temperature, thereby effectively contributing to austenite grain refinement. Titanium may be included in 0.01 wt% to 0.1 wt% based on the total weight of the base steel sheet 100'. When titanium is included in the content range, poor continuous casting and coarsening of precipitates may be prevented, and physical properties of the steel material may be easily secured, and defects such as occurrence of cracks may be prevented on the surface the steel material.

Niobium (Nb) is added for the purpose of increasing strength and toughness according to a decrease in martensite packet size. Niobium may be included in 0.01 wt% to 0.1 wt% based on the total weight of the base steel sheet 100'. When niobium is included in the above range, the crystal grain refinement effect of the steel material is excellent in the hot rolling and cold rolling process, it prevents cracks in the slab and brittle fracture of the product during steelmaking/continuous casting, and it is possible to minimize the formation of steelmaking coarse precipitates.

Chromium (Cr) is added for the purpose of improving the hardenability and strength of the base steel sheet 100'. Chromium may be included in 0.01 wt% to 0.5 wt% based on the total weight of the base steel sheet 100'. When chromium is included in the above range, the hardenability and strength of the base steel sheet 100' may be improved, and an increase in production costs and a decrease in toughness of the steel material may be prevented.

Molybdenum (Mo) may contribute to the improvement of the strength of the base steel sheet 100' by suppressing coarsening of precipitates and increasing the hardenability during hot rolling and hot pressing. Such molybdenum (Mo) may be included in an amount of 0.01 wt% to 0.5 wt% based on the total weight of the base steel sheet 100'.

The hot stamping part 20 according to an embodiment of the present invention may include a plated layer 200' attached to the base steel sheet 100'. In one embodiment, the thickness of the plated layer 200' after the hot stamping process may be 10 µm to 60 µm. In this case, the thickness of the plated layer 200' may mean an average thickness of the plated layer 200'. When the thickness of the plated layer 200' is less than 10 µm, it is not enough to exhibit corrosion resistance as the plated layer 200', and when the thickness of the plated layer 200' exceeds 60 µm, there may be a concern that the plated layer 200' may be peeled off during the hot stamping process.

In an embodiment, the plated layer 200' may include silicon (Si), zinc (Zn), magnesium (Mg), aluminum (Al), strontium (Sr), and the balance of iron (Fe) and other inevitable impurities. The hot-stamped part 20 including the plated layer 200' of this embodiment may be formed by hot stamping the hot pressing steel sheet 10 according to the third embodiment described above.

The plated layer 200' may include an alloying blocking layer 210, an intermediate alloy layer 220, and a corrosion resistance reinforcement layer 230, which are sequentially stacked on the base steel sheet 100'.

The alloying blocking layer 210 is a layer arranged closest to the base steel sheet 100', and may be a layer having a high content of iron (Fe) components in the plated layer 200'. The alloying blocking layer 210 is a layer generated by mutual diffusion of an iron (Fe) component in the base steel sheet 100' and an aluminum (Al) component in the plated layer 200', and may include Fe-Al and/or Fe-Al-Si compounds. Since the alloying blocking layer 210 has a higher melting point than the corrosion resistance reinforcement layer 230, it is possible to prevent a liquid metal embrittlement phenomenon in which the corrosion resistance reinforcement layer 230 melts during the hot stamping process and aluminum (Al) penetrates into the structure of the base steel sheet 100'.

The thickness of the alloying blocking layer 210 may be 20 µm or less, more preferably 15 µm or less. When the thickness of the alloying blocking layer 210 is formed in excess of 20 µm, there may be a problem that the plated layer 200' of the processing portion is detached during the hot stamping process. The thickness of the alloying blocking layer 210 may be controlled by a content of silicon (Si) or heat treatment conditions. In an embodiment, the alloying blocking layer 210 may include 70 wt% to 90 wt% of iron (Fe), 5 wt% to 15 wt% of aluminum (Al), and 0.5 wt% to 4wt% of silicon (Si).

The intermediate alloy layer 220 is a layer that plays a major role in forming the corrosion resistance of the entire plated layer 200', and may include a relatively large amount of zinc (Zn) compared to the alloying blocking layer 210. The corrosion resistance of the plated layer 200' may be improved through a large amount of zinc (Zn) included in the intermediate alloy layer 220. In an embodiment, the intermediate alloy layer 220 may include 35 wt% to 45 wt% of iron (Fe), 30 wt% to 45 wt% of aluminum (Al), 0.5 wt% to 5 wt% to of silicon (Si), and 5 wt% to 20 wt% of zinc (Zn).

The corrosion resistance reinforcement layer 230 is substantially provided in the surface layer of the plated layer 200' and is a layer that is primarily responsible for corrosion resistance, and includes a dense structure formed to suppress oxygen penetration on the surface, thereby improving the sacrificial anti-corrosion capability in the initial corrosion reaction. In an embodiment, the corrosion resistance reinforcement layer 230 may include 15 wt% to 50 wt% of iron (Fe), 10 wt% to 35 wt% of aluminum (Al), and may include zinc (Zn), magnesium (Mg), and strontium (Sr).

A surface oxide layer generated by oxidation of strontium (Sr) may be provided on a surface of the corrosion resistance reinforcement layer 230. In an embodiment, an average thickness of the surface oxide layer may be less than 10 µm, more specifically 100 nm to 10 µm. The surface oxide layer is formed in a dense structure to block oxygen introduced from the outside, thereby suppressing oxygen penetration into the surface layer of the plated layer 200' and preventing the surface oxide layer itself from becoming thick. According to an embodiment, the surface oxide layer may include 30 wt% to 70 wt% of zinc (Zn), 5 wt% to 20 wt% of oxygen (O), 3 wt% to 20 wt% of iron (Fe), 0.5 wt% to 10 wt% of magnesium (Mg), 0.5 wt% to 20 wt% of aluminum (Al), 0 to 5 wt% of silicon (Si), and 0 to 1 wt% of strontium (Sr).

More specifically, referring to FIGS. 7A and 7B, FIG. 7A illustrates an image in which the oxygen (O) component of the plated layer 200' to which strontium (Sr) is added is mapped according to an embodiment of the present invention, and FIG. 7B illustrates an image in which the oxygen (O) component of the plated layer to which strontium (Sr) is not added is mapped according to a comparative example. As shown in FIFS. 7A and 7B, it may be confirmed that a thickness of a region where oxygen (O) is distributed in FIG. 7A where strontium (Sr) is added is significantly less than a thickness of a region where oxygen (O) is distributed in FIG. 7B where strontium (Sr) is not added. In this way, the thin surface oxide layer may prevent oxygen from combining with zinc (Zn) and/or magnesium (Mg) by suppressing oxygen penetration into the surface layer of the plated layer 200', and thus preserve the contents of zinc (Zn) and magnesium (Mg) capable of sacrificial anti-corrosion in a metallic state, thereby improving the sacrificial anti-corrosion capability during the initial corrosion reaction in terms of corrosion resistance.

In addition, as the thickness of the metal oxide on the surface of the plated layer 200' becomes less, weldability may be improved by reducing the surface resistance of the plated layer 200'.

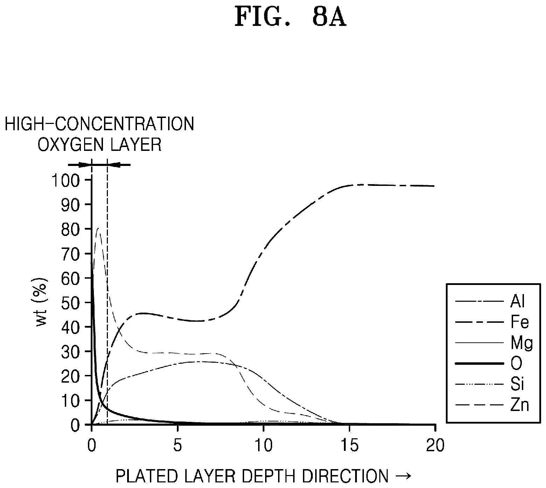

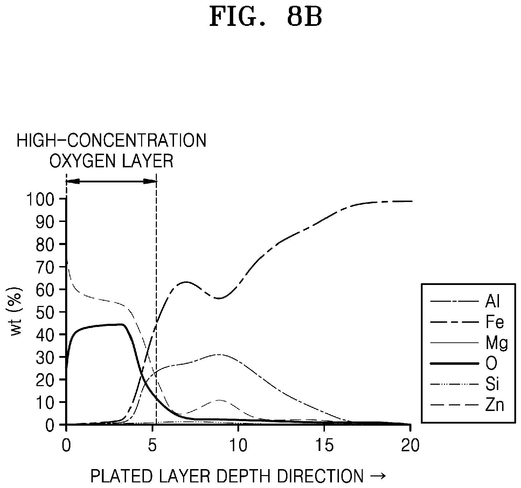

This phenomenon may also be confirmed through the component analysis graphs of each element of FIGS. 8A and 8B.

FIGS. 8A and 8B are graphs showing results of analyzing the content of each element in a depth direction from the surface of a plated layer according to an embodiment and a comparative example of the present invention. FIG. 8A corresponds to FIG. 7A, which is the above-described embodiment of the present invention, and illustrates the plated layer 200' including strontium (Sr), and FIG. 8B corresponds to FIG. 7B, which is the above-described comparative example, and illustrates the plated layer 200' not including strontium (Sr).

Referring to FIGS. 8A and 8B, when a region having an oxygen (O) content of about 10 wt% or more is referred to as a high-concentration oxygen layer, in the plated layer 200' of FIG. 8A, the high-concentration oxygen layer has a thickness of about 1 µm. In the plated layer of FIG. 8B, it may be seen that the high-concentration oxygen layer was formed relatively very thick, having a thickness of about 5 µm.

More specifically, it may be seen that the concentration of oxygen (O) in the plated layer 200' of FIG. 8A is very high from the surface to a depth of about 1 µm or less, and rapidly decreases to 10 wt% or less from a depth exceeding about 1 µm thickness. As described above, this means that strontium (Sr) combines with oxygen (O) on the surface of the plated layer 200' to form a surface oxide layer, thereby preventing oxygen (O) from penetrating into the plated layer 200'.

Meanwhile, it may be seen that the concentration of oxygen (O) in the plated layer of FIG. 8B is high in 10 wt% to 50 wt% from the surface to a depth of about 5 µm or less, and is reduced to 10 wt% or less from a depth exceeding about 5 µm. That is, since the plated layer of the comparative example does not include strontium (Sr), the penetration of oxygen (O) is not be sufficiently suppressed from the surface of the plated layer, and thus the thickness of the high-concentration oxygen layer becomes greater, which may mean that the metal elements included in the plated layer combine with oxygen (O), resulting in a thickening of the surface oxide layer.

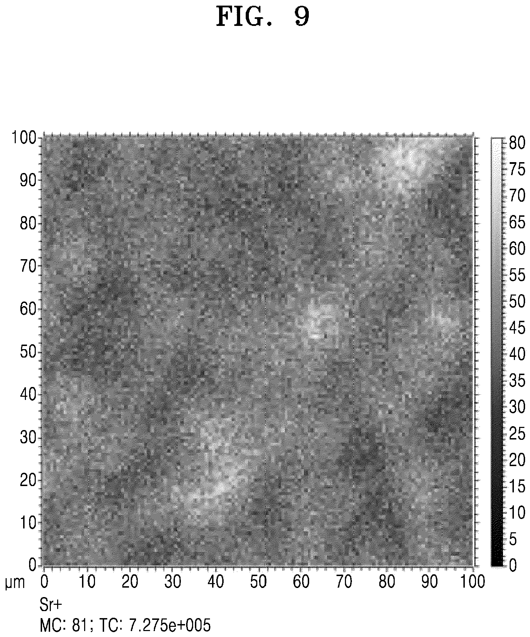

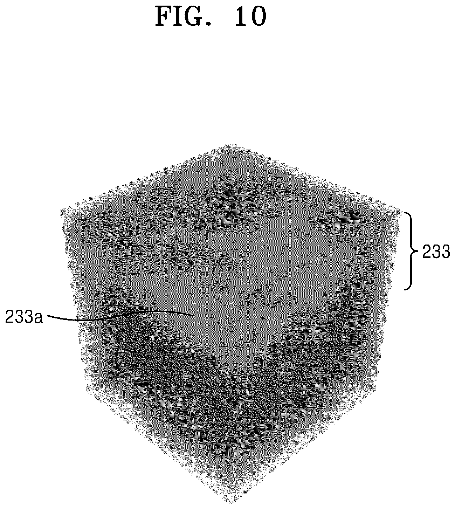

FIG. 9 illustrates a two-dimensional (2D) image of strontium (Sr) distribution on a surface of a plated layer of a steel sheet for hot pressing before hot stamping according to an embodiment of the present invention, in which the strontium (Sr) distribution is measured by secondary ion mass spectrometry (SIMS), and FIG. 10 illustrates a three-dimensional (3D) image of strontium (Sr) distribution on a surface of a plated layer of a hot-stamped part after hot stamping according to an embodiment of the present invention, in which the strontium (Sr) distribution is measured by SIMS.

Although a content of the strontium (Sr) included in the plated layer according to an embodiment of the present invention is very low, the distribution of strontium (Sr) present in the surface layer of the plated layer may be confirmed through SIMS analysis as shown in FIGS. 9 and 10.

Referring to FIG. 9, the content of strontium (Sr) is indicated in color according to the right scale bar. That is, in FIG. 9, the content of strontium (Sr) is higher as a relatively brighter color is displayed. As shown in FIG. 9, it may be confirmed through SIMS analysis that strontium (Sr) is intensively distributed on the surface of the plated layer.

In addition, referring to FIG. 10, a region 233a in which strontium (Sr) is enriched appears on the surface layer of the plated layer of the hot-stamped part. The region 233a in which strontium (Sr) was enriched, which was shown through SIMS analysis, was indicated as a relatively bright region. The region 233a in which strontium (Sr) is enriched may be present in an extreme surface layer in the surface layer portions of the plated layer, which may form the surface oxide layer 233 as described above. In this way, the region 233a in which strontium (Sr) is enriched forms a thin layer surface oxide layer 233 to suppress oxygen penetration at the surface of the plated layer, and preserve the contents of metallic zinc (Zn) and magnesium (Mg) that may perform the sacrificial anti-corrosion, thereby improving the sacrificial anti-corrosion capability during the initial corrosion reaction in terms of corrosion resistance.

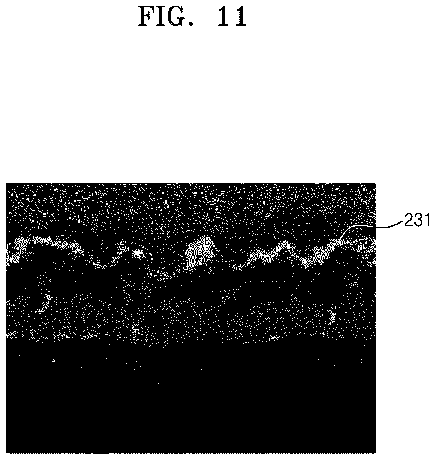

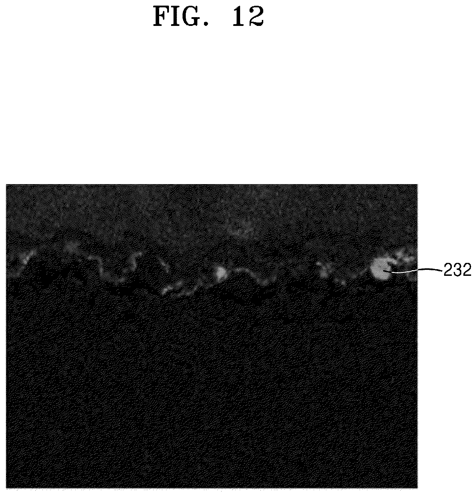

Meanwhile, the corrosion resistance reinforcement layer 230 may include a region where zinc (Zn) is enriched and a region where magnesium (Mg) is enriched, which will be described later with reference to FIGS. 11 and 12. For example, the region where zinc (Zn) is enriched (hereinafter, a first enriched portion) and the region where magnesium (Mg) is enriched (hereinafter, the second enriched portion) may be located under the region 233a where strontium (Sr) is enriched, that is, the surface oxide layer 233. Alternatively, at least a portion of the first enriched portion and the second enriched portion may be mixed with the region 233a in which strontium (Sr) is enriched.

FIGS. 11 and 12 illustrate images obtained by mapping a zinc (Zn) component and a magnesium (Mg) component based on a cross section of a plated layer according to another embodiment of the present invention.

In an embodiment, the plated layer 200' may include silicon (Si), zinc (Zn), magnesium (Mg), aluminum (Al), and the balance of iron (Fe) and other inevitable impurities. The hot-stamped part 20 including the plated layer 200' of this embodiment may be formed by hot stamping the hot pressing steel sheet 10 according to the first and second embodiments described above.

The plated layer 200' may include an alloying blocking layer 210, an intermediate alloy layer 220, and a corrosion resistance reinforcement layer 230, which are sequentially stacked on the base steel sheet 100'. The alloying blocking layer 210 is the same as the above-described embodiment, and hereinafter, the intermediate alloy layer 220 and the corrosion resistance reinforcement layer 230 differing from the above-described embodiment, will be described.

The intermediate alloy layer 220 is a layer that plays a major role in forming the corrosion resistance of the entire plated layer 200', and may include a relatively large amount of zinc (Zn) compared to the alloying blocking layer 210. The corrosion resistance of the plated layer 200' may be improved through a large amount of zinc (Zn) included in the intermediate alloy layer 220.

In an embodiment, when the zinc content is 30 wt% to 45 wt% in the plated layer 200 of the steel sheet 10 for hot pressing before hot stamping described with reference to FIG. 1, the intermediate alloy layer 220 may include Zn-rich phase in which zinc is concentratively precipitated. When the zinc content is included in the plated layer 200 in an amount of less than 30 wt%, the Zn-rich phase may not be sufficiently formed. The Zn-rich phase may be randomly precipitated in the intermediate alloy layer 220.

In an embodiment, the Zn-rich phase in the intermediate alloy layer 220 may be included in an amount of about 3 % to 10 % by a surface area fraction. For example, when the Zn-rich phase is included in less than 3 % within the intermediate alloy layer 220, it is insufficient to express corrosion resistance through sacrificial anti-corrosion properties, and when the Zn-rich phase is included in more than 10 %, the probability of a liquid metal embrittlement (LME) phenomenon occurring during processing or welding after hot stamping heat treatment may increase. Therefore, when the Zn-rich phase is included in about 3 % to 10 % within the intermediate alloy layer 220, the corrosion resistance of the plated layer 200 may be strengthened and the LME phenomenon occurring due to the low melting point of zinc may be prevented.

In order to form a Zn-rich phase, the temperature during hot stamping should be controlled to about 900 °C to 950 °C. When hot stamping is performed at a temperature of 900 °C to 950 °C, zinc distributed on aluminum in the plated layer 200 may be removed and precipitated in the intermediate alloy layer 220. For example, when the temperature is less than 900 °C during hot stamping, zinc diffusion is relatively weak, so that Zn-rich phases are not formed in the intermediate alloy layer 220, and when the temperature exceeds 950 °C during hot stamping, excessive Zn Ash (ZnO) defects may be generated, thereby impairing the surface appearance and plating quality of the plated layer 200.

The corrosion resistance of the plated layer 200 may be improved through the Zn-rich phase included in the intermediate alloy layer 220. In an embodiment, the Zn-rich phase may include 50 wt% to 99 wt% of zinc (Zn), 5 wt% to 20 wt% of iron (Fe), 0 wt% to 5 wt% of aluminum (Al), 0 wt% to 1 wt% of silicon (Si), and 0 wt% to 5 wt% of magnesium (Mg).

The corrosion resistance reinforcement layer 230 is substantially provided in the surface layer of the plated layer 200 and is a layer primarily responsible for corrosion resistance, and includes a zinc (Zn) enriched region (hereinafter, first enriched portion) and a magnesium (Mg) enriched region (hereinafter referred to as a second enriched section). In an embodiment, the corrosion resistance reinforcement layer 230 may include 20 wt% to 45 wt% of iron (Fe), 10 wt% to 35 wt% of aluminum (Al), zinc (Zn), and magnesium (Mg). Hereinafter, the first enriched portion and the second enriched portion will be described in detail with reference to FIGS. 11 and 12.

Referring to FIGS. 11 and 12 together, the corrosion resistance reinforcement layer 230 may include a first enriched portion 231 (see FIG. 11) in which zinc (Zn) is enriched and a second enriched portion 232 (see FIG. 12) in which magnesium (Mg) is enriched. The first enriched portion 231 and the second enriched portion 232 may serve to improve corrosion resistance by a corrosion product generated by being involved in a chemical reaction in a corrosion environment.

The first enriched portion 231 and the second enriched portion 232 may be formed through a hot stamping process. That is, the first enriched portion 231 and the second enriched portion 232 may not exist in the plated layer 200 of the hot pressing steel sheet 10 described with reference to FIGS. 1 to 3 before the hot stamping process. The zinc (Zn) and magnesium (Mg) components distributed in the plated layer 200 of the hot pressing steel sheet 10 move to the surface layer of the plated layer 200 in the process of undergoing the hot stamping process, and may be distributed as the first enriched portion 231 and the second enriched portion 232 in the corrosion resistance reinforcement layer 230 of the hot-stamped part 20.

As shown in FIGS. 11 and 12, the first enriched portion 231 and the second enriched portion 232 may include separate layered structures, respectively. Alternatively, in some regions, the first enriched portion 231 and the second enriched portion 232 may be mixed with each other. In other words, the second enriched portion 232 may be arranged on the first enriched portion 231 in some regions, the first enriched portion 231 may be arranged on the second enriched portion 232 in other regions, the first enriched portion 231 may be arranged in a substantially layered structure, and the second enriched portion 232 may be arranged above or below the first enriched portion 231 through the first enriched portion 231.

In order for the first enriched portion 231 in which zinc (Zn) is enriched to exhibit sufficient corrosion resistance in the plated layer 200', an average thickness of the first enriched portion 231 is preferably formed to be 1 µm to 10 µm, more preferably 1 µm to 5 µm. In an embodiment, the first enriched portion 231 may include 2 wt% to 12 wt% of iron (Fe), 0 wt% to 10 wt% of aluminum (Al), 0 wt% to 2 wt% of silicon (Si), 40 wt% to 80 wt% of zinc (Zn), and 1 wt% to 10 wt% of magnesium (Mg).

In order for the second enriched portion 232 in which magnesium (Mg) is enriched to exhibit sufficient corrosion resistance in the plated layer 200', an average thickness of the second enriched portion 232 is preferably formed to be 1 µm to 10 µm. In an embodiment, the second enriched portion 232 may include 10 wt% to 20 wt% of iron (Fe), 1 wt% to 20 wt% of aluminum (Al), 0 wt% to 2 wt% of silicon (Si), 5 wt% to 20 wt% of zinc (Zn), and 10 wt% to 40 wt% of magnesium (Mg).

Hereinafter, the present invention will be described in more detail with reference to embodiments. However, the following examples are intended to describe the present invention in more detail, and the scope of the present invention is not limited by the following examples. The following embodiment may be appropriately modified and changed by those skilled in the art within the scope of the present invention.

### <Evaluation Method>

A steel sheet used as an embodiment includes 0.01 wt% to 0.5 wt% of carbon (C), 0.01 wt% to 3.0 wt% of silicon (Si), 0.3 wt% to 5.0 wt% of manganese (Mn), more than 0 to 0.1 wt% of phosphorus (P), more than 0 to 0.1 wt% of sulfur (S), at least one component of boron (B), titanium (Ti), niobium (Nb), chromium (Cr), molybdenum (Mo), and nickel (Ni), and the balance of iron (Fe) and other inevitable impurities.

After immersing a 1.0 mm thick cold-rolled steel sheet in an alkaline solution at 50 °C for 30 minutes, the 1.0 mm thick cold-rolled steel sheet is washed with water to prepare a specimen to remove foreign substances and oil from the surface. The specimen is annealed and then plated.

The annealing is carried out in a reducing atmosphere including about 10 % to 30 % of hydrogen and about 70 % to 90 % of nitrogen, and an annealing heat treatment temperature is 700 °C to 850 °C.

For plating, the annealed heat-treated specimen is cooled to a plating bath temperature, immersed in a plating bath for 2 seconds, and pulled up, to then adjust a plating thickness to around 25 µm by nitrogen wiping, and is cooled to room temperature at a cooling rate 5 °C /sec to 30 °C /sec to solidify. At this time, the plating bath temperature is set to 500 °C to 660 °C. The plating bath may include 1 wt% to 5 wt% of silicon (Si), 20 wt% to 45 wt% of zinc (Zn), 0.2 wt% to 3 wt% of magnesium (Mg), 0.01 wt% to 0.5 wt% of strontium (Sr), and the balance of aluminum (Al).

After manufacturing a plated steel sheet under the above conditions, the plated steel sheet is heated to 850 °C to 960 °C for 3 to 10 minutes for hot stamping, and the heated plated steel sheet is hot-stamped with a press mold. In this case, a specimen (hereinafter referred to as a hot-stamped part) including an Al-Si-Zn-Mg-Sr-based plated layer was manufactured by cooling at a cooling rate of 25 °C/sec at the same time as hot stamping molding.

### <Evaluation of corrosion resistance>

Corrosion resistance was evaluated by measuring the corrosion potential through an electrochemical test (electrokinetic potential evaluation). In this evaluation, the lower the corrosion potential value, the better the sacrificial anti-corrosion capability. Therefore, based on the corrosion resistance X (inferior) of a hot stamping hot-dip galvanized steel sheet (e.g., AI-10wt%Si plated steel sheet) as a comparative example (hereinafter referred to as Comparative Example 1) for hot-stamped parts, the corrosion potential compared to Comparative Example 1 was evaluated as ⊚, ∘, and △ with lower the corrosion potential, depending on the corrosion potential size.

### <Evaluation of weldability>

The relative weldability was evaluated for a measured initial resistance value by measuring a change in dynamic resistance over time. As a comparative example (hereinafter referred to as Comparative Example 1) for hot-stamped parts, the relative weldability was evaluated as ⊚ for the case of equal or greater than that of the hot stamping hot-dip galvanized steel sheet (e.g., AI-10wt%Si plated steel sheet) and △ for the case of inferiority.

**[Table 1]**

| Class | Al (%) | Zn (%) | Si (%) | Mg (%) | Sr (%) | Surface oxide layer thickness (µm) | Weldabili ty | Corros ion resista nce | Plating Outer appear ance |
|---|---|---|---|---|---|---|---|---|---|
| Compara tive Example 1 | The balan ce | | 10 | | | >10 | ⊚ | X | ⊚ |
| Compara tive Example 2 | The balan ce | 25 | 3 | 0.8 | 0 | 10-15 | Δ | Δ | ⊚ |
| Compara tive Example 3 | The balan ce | 30 | 3 | 0.8 | 0 | 15-20 | Δ | ○ | ⊚ |
| Compara tive Example 4 | The balan ce | 35 | 3 | 0.8 | 0 | 15-20 | Δ | ○ | ⊚ |
| Compara tive Example 5 | The balan ce | 40 | 3 | 0.8 | 0 | 15-25 | Δ | ○ | ⊚ |
| Compara tive Example 6 | The balan ce | 35 | 3 | 0.8 | 0.005 | 17 | Δ | ○ | ⊚ |
| Compara tive Example 7 | The balan ce | 35 | 3 | 0.8 | 0.7 | >10 | ⊚ | ⊚ | Δ |
| Embodim ent 1 | The balan ce | 25 | 3 | 0.8 | 0.02 | <10 | ⊚ | ⊚ | ⊚ |
| Embodim ent 2 | The balan ce | 30 | 2 | 0.8 | 0.05 | <10 | ⊚ | ⊚ | ⊚ |
| Embodim ent 3 | The balan ce | 35 | 3 | 0.8 | 0.2 | <10 | ⊚ | ⊚ | ⊚ |
| Embodim ent 4 | The balan ce | 40 | 3 | 1 | 0.5 | <10 | ⊚ | ⊚ | ○ |

As may be seen in [Table 1], Comparative Example 1, which is an Al-10wt%Si plated steel sheet, shows the most inferior results in corrosion resistance evaluation because the plated layer does not contain a metal with sacrificial anti-corrosion capability. Meanwhile, Comparative Examples 2 to 6, which are plated steel sheets including zinc (Zn) and magnesium (Mg), showed better corrosion resistance than Comparative Example 1, but showed more inferior results than Embodiments 1 to 4 of the present invention to which strontium (Sr) was added.

This evaluation result is related to the thickness of the surface oxide layer, and it may be seen that, in Comparative Examples 2 to 6, the thickness of the surface oxide layer was formed to be about 10 µm to about 25 µm, whereas in Embodiments 1 to 4, the thickness of the surface oxide layer was formed to be less than 10 µm and thus formed to be relatively thinner. This evaluation result shows that, in the case of Comparative Examples 2 to 6, the amount of oxide present on the surface is large, making it difficult to fully exhibit the initial sacrificial anti-corrosion capability, whereas in the case of Embodiments 1 to 4, zinc (Zn) and magnesium (Mg) that play a prerequisite role in the initial corrosion environment are not oxidized and the proportions of zinc (Zn) and magnesium (Mg) activated in elemental states are relatively high, thereby showing excellent corrosion resistance.

In addition, in the case of weldability, when comparing Comparative Examples 2 to 5 without strontium (Sr) and Comparative Examples 6 with strontium (Sr) added below a reference value with Embodiments 1 to 4 with strontium (Sr) added, in the case of Embodiments 1 to 4 with strontium (Sr) added, the thickness of the surface oxide layer is formed to be less than 10 µm, and the initial resistance value decreases during welding, resulting in superior weldability compared to Comparative Examples 2 to 6. Meanwhile, in the case of weldability, it may be seen that Comparative Example 7 showed excellent results at the same level as Embodiments 1 to 4, but the outer appearance of the plating was poor due to the occurrence of strontium (Sr) appearing in the non-plated region due to excessive addition of strontium (Sr) above the standard value.

As described above, the disclosure has been described with reference to embodiments shown in the drawings, but this is only an example, and those of ordinary skill in the art will understand that various modifications and modifications of embodiments are possible therefrom. Therefore, the true technical protection scope of the disclosure should be determined by the technical idea of the appended claims.

## Claims

1. A steel sheet for hot pressing comprising:
a base steel sheet; and
a plated layer arranged on the base steel sheet and comprising 20 wt% to 45 wt% of zinc (Zn), 0.2 wt% to 3 wt% of magnesium (Mg), 1 wt% to 5 wt% of silicon (Si), 0.01 wt% to 0.5 wt% of strontium (Sr), and the balance of aluminum (Al) and other inevitable impurities.

2. The steel sheet for hot pressing of claim 1, wherein the plated layer has a Sr-based oxide layer on a surface of the plated layer.

3. The steel sheet for hot pressing of claim 2, wherein an average thickness of the Sr-based oxide layer is 10 nm to 5 µm.

4. The steel sheet for hot pressing of claim 1, wherein magnesium (Mg) of a surface layer of the plated layer is distributed as an Mg-based intermetallic compound, and
80 % or more of the Mg-based intermetallic compound is distributed in a zinc (Zn) rich region located in the surface layer of the plated layer.

5. The steel sheet for hot pressing of claim 2, wherein the Mg-based intermetallic compound comprises a Mg₂Si phase.

6. The steel sheet for hot pressing of claim 5, wherein the Mg₂Si phase distributed on the surface of the plated layer has a phase fraction of 2 % to 10%.

7. A hot-stamped part comprising:
a base steel sheet; and
a plated layer arranged on the base steel sheet and comprising zinc (Zn), magnesium (Mg), silicon (Si), aluminum (Al), strontium (Sr), and the balance of iron (Fe) and other inevitable impurities, wherein
the plated layer comprises an alloying blocking layer, an intermediate alloy layer, and a corrosion resistance reinforcement layer, which are sequentially stacked from the base steel sheet, and
the corrosion resistance reinforcement layer comprises a surface oxide layer including strontium (Sr).

8. The hot-stamped part of claim 7, wherein an average thickness of the surface oxide layer is less than 10 µm.

9. The hot-stamped part of claim 7, wherein the surface oxide layer comprises 30 wt% to 70 wt% of zinc (Zn), 5 wt% to 20 wt% of oxygen (O), 3 wt% to 20 wt% of iron (Fe), 0.5 wt% to 10 wt% of magnesium (Mg), 0.5 wt% to 20 wt% of aluminum (Al), 0 to 5 wt% of silicon (Si), and 0 to 1 wt% of strontium (Sr).

10. The hot-stamped part of claim 7, wherein the corrosion resistance reinforcement layer comprises a first enriched portion in which zinc (Zn) is enriched and a second enriched portion in which magnesium (Mg) is enriched.

11. The hot-stamped part of claim 7, wherein the alloying blocking layer comprises: 70 wt% to 90 wt% of iron (Fe); 5 wt% to 15 wt% of aluminum (Al); and 0.5 wt% to 4 wt% of silicon (Si).

12. The hot-stamped part of claim 7, wherein the intermediate alloy layer comprises: 35 wt% to 45 wt% of iron (Fe); 30 wt% to 45 wt% of aluminum (Al); 0.5 wt% to 5 wt% of silicon (Si); and 5 wt% to 20 wt% of Zinc (Zn).

13. The hot-stamped part of claim 7, wherein the corrosion resistance reinforcement layer comprises: 20 wt% to 45 wt% of iron (Fe); and 10 wt% to 35 wt% of aluminum (Al).

14. The hot-stamped part of claim 7, wherein the first enriched portion has an average thickness of 1 µm to 10 µm.

15. The hot-stamped part of claim 7, wherein an average thickness of the plated layer is 15 µm to 40 µm.
